# EUROPEAN PATENT APPLICATION

(11) **EP 2 279 665 A1**
(43) Date of publication of application: **02.02.2011**
(21) Application number: 10169576.5
(22) Date of filing: 14.07.2010
(51) Int. Cl.: A21B 1/28, F24B 5/08, F24B 1/199

(54) **Static oven for the industrial wood-fire baking of food, particularly bread, pizzas and the like**

(30) Priority: 21.07.2009 IT MO20090187
(71) Applicant: C.L.M. S.r.l., 31043 Fontanelle TV (IT)
(72) Inventor: Roncadin, Renzo, 33080, Fiume Veneto (PN) (IT)
(74) Representative: Modiano, Micaela Nadia

(57) **Abstract**

A static oven (1) for the industrial wood-fired baking of food, particularly bread, pizzas and the like, comprising
- at least one frame (2) for supporting at least one food baking chamber (4), provided with at least one opening (5) for insertion and removal of food and at least one surface (6) for supporting the food;
- at least one chamber (7) for the combustion of at least one fuel such as wood or the like, which is separate with respect to the baking chamber (4) and is associated with the frame (2), the combustion chamber (7) comprising at least one discharge port (8) for the hot combustion gases (F) of the fuel, which is associated with first means for extracting the hot gases, the first extraction means wrapping at least partially around the baking chamber (4) in order to heat it by convection.

The static oven comprises second means for extracting the hot gases, which comprise a plurality of ports (9, 10) for the inflow of the gases extracted from the combustion chamber (7) and connected to the baking chamber (4), in order to introduce in the baking chamber (4), above the supporting surface (6), gases adapted to make contact with the food, the baking chamber (4) comprising at least one port (12) for the outflow of the gases, which is associated with the baking chamber (4) for the expulsion of the gases cooled by passage through the food.

## Description

The present invention relates to a static oven for the industrial wood-fired baking of food, particularly bread, pizzas and the like.

Several types of static oven dedicated to the baking of food are known.

In particular, two different types of static oven are known which have a food baking chamber provided with an opening for the insertion and removal of the food which controls a fixed surface for supporting such food.

The first known type of wood-fired oven has a region of the supporting surface that is dedicated to accommodating the fuel for direct heating of the baking chamber.

This first type of wood-fired static oven, while ensuring good baking performance as regards the organoleptic characteristics of the food itself, which is in contact with the gases that derive from the combustion of the wood, is not however free from drawbacks, which certainly include the fact that it is difficult for them to ensure heating uniformity of the baking chamber.

In fact, feeding wood into the baking chamber is not always possible, especially for certain types of food, and moreover the combustion process might not be always constant over time depending on the characteristics of the fuel used.

A second known type of wood-fired static oven for the baking of food, which obviates these drawbacks described above, is the one described in EP0456594, which discloses a wood-fired oven, which has a wood combustion chamber that is separate from the baking chamber and is heated by convection by the gases that derive from the combustion of the wood itself by means of ducts for their conveyance which wrap around, at least partially and externally, the baking chamber.

The gases, despite never making contact with the food, heat the baking chamber and bake such food.

As can be observed easily, this second known type of wood-fired oven, despite ensuring greater constancy in the combustion process and greater uniformity of the heating of the baking chamber, is however not free from drawbacks, including the fact that the organoleptic characteristics of the food being baked in such ovens are by far inferior to baking in wood-fired ovens of the traditional type, because the wood combustion gases are channeled in ducts which are external to such baking chamber.

The aim of the present invention is to eliminate the above cited drawbacks of the background art, by devising a static oven for the industrial wood-fired baking of food, particularly bread, pizzas and the like, that allows to obtain food products having high-level organoleptic characteristics and at the same time has a baking temperature that is substantially constant and continuous over time.

Within this aim, an object of the invention is to provide a static oven that allows the emission of combustion gases into the atmosphere that have a relatively low temperature and therefore have a lower environmental impact.

Another object of the invention is to provide a static oven that allows to increase the baking performance of food products and is at the same time easy to use.

Another object of the invention is to provide a static oven that allows to optimize the automated steps for feeding the fuel into the combustion chamber, reducing to a minimum the intervention of the assigned operators, and also ensures high stability and uniformity of the temperature inside the baking chamber, thus leading to high quality of the baking of the food and at the same time to a reduction in the costs and consumption of fuel.

Another object of the invention is to provide a static oven that can work in conditions of maximum safety for the staff that works in its vicinity, reducing its maintenance and programming costs.

Another object of the present invention is to provide a static oven that has a simple structure, is relatively easy to provide in practice, safe in use and effective in operation, and has a relatively low cost.

This aim and these and other objects, which will become better apparent hereinafter, are achieved by the present static oven for the industrial wood-fired baking of food, particularly bread, pizzas and the like, which comprises
- at least one frame for supporting at least one food baking chamber, provided with at least one opening for insertion and removal of food and at least one surface for supporting said food;
- at least one chamber for the combustion of at least one fuel such as wood or the like, which is separate with respect to said baking chamber and is associated with said frame, said combustion chamber comprising at least one discharge port for the hot combustion gases of said fuel, which is associated with first means for extracting said hot gases, said first extraction means wrapping at least partially around said baking chamber in order to heat it by convection;
   **characterized in that** it comprises second means for extracting said hot gases, which comprise a plurality of ports for the inflow of said gases extracted from said combustion chamber and connected to said baking chamber, in order to introduce in said baking chamber, above said supporting surface, said gases adapted to make contact with said food, said baking chamber comprising at least one port for the outflow of said gases, which is associated with said baking chamber for the expulsion of said gases cooled by passage through said food.

Further characteristics and advantages of the present invention will become better apparent from the detailed description that follows of a preferred but not exclusive embodiment of a static oven for the industrial wood-fired baking of food, particularly bread, pizzas and the like, illustrated by way of non-limiting example in the accompanying drawings, wherein:

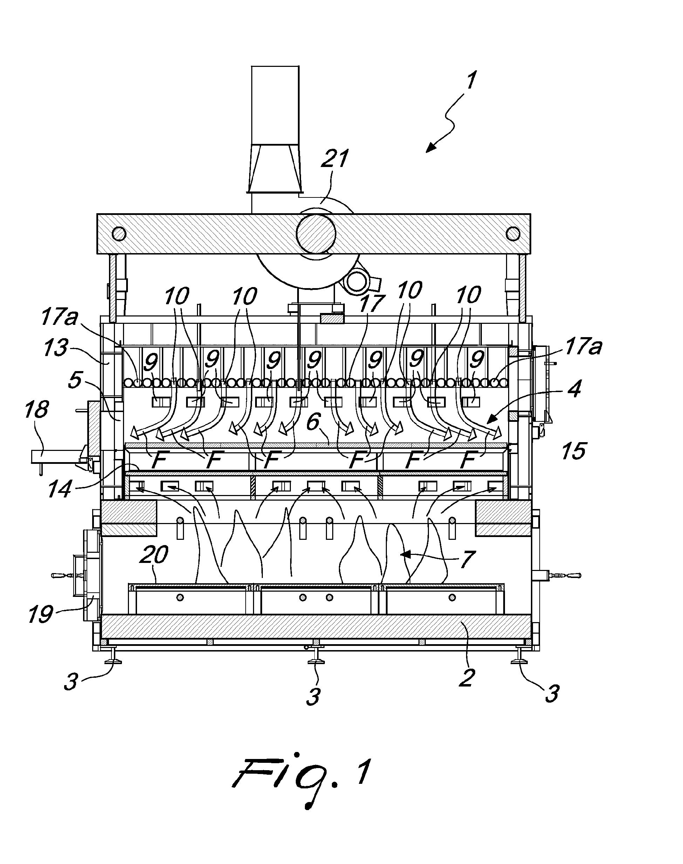

Figure 1 is a sectional side view of an oven according to the invention;

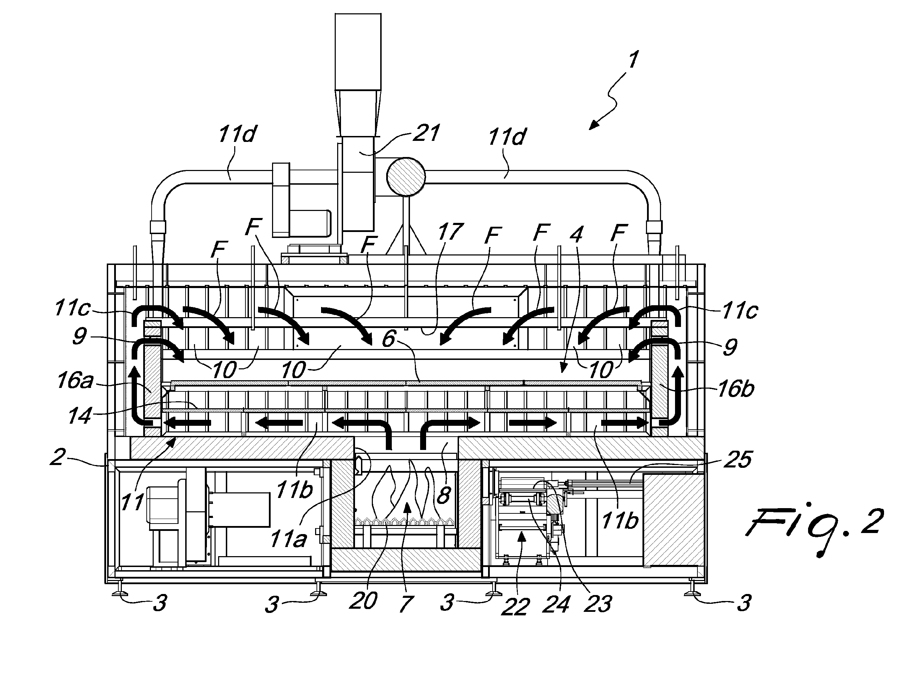

Figure 2 is a sectional front view of the oven of Figure 1;

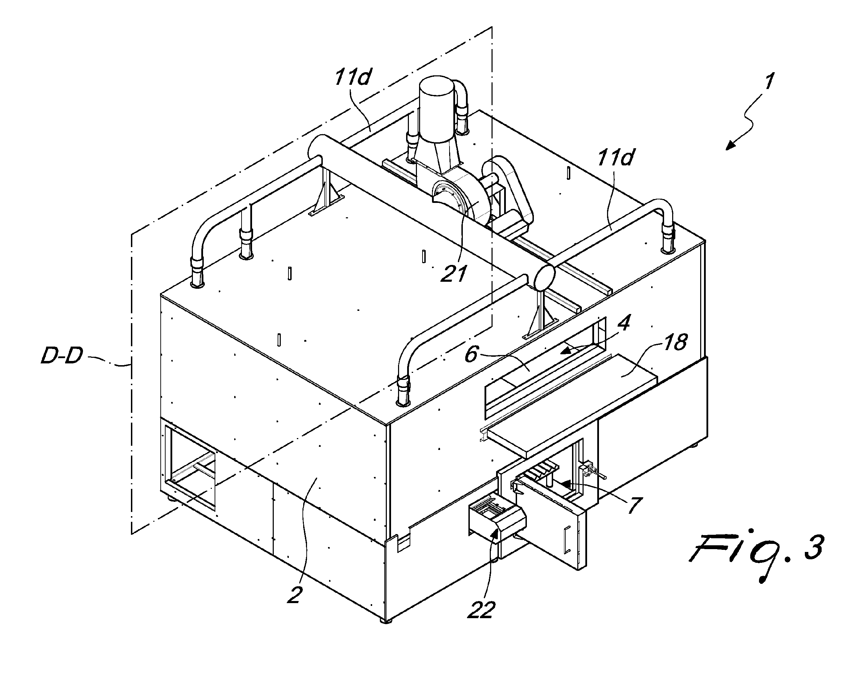

Figure 3 is a perspective view of the static oven, according to the invention;

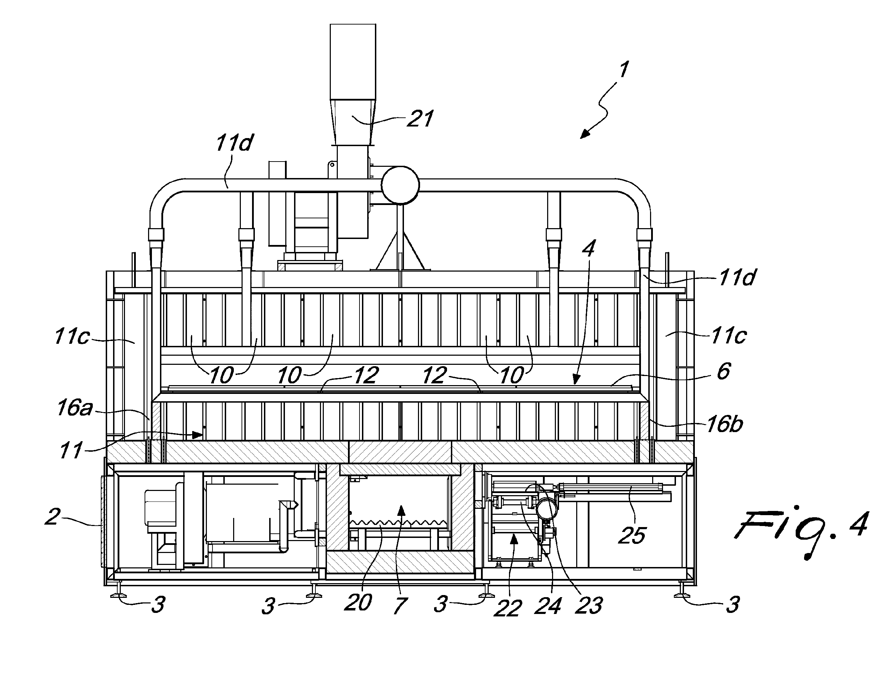

Figure 4 is a sectional view, taken along the plane D-D of Figure 3.

With reference to the figures, a static oven for the industrial wood-fired baking of food, particularly bread, pizzas and the like, is been generally designated by the reference numeral 1.

The oven 1 comprises at least one frame 2, provided with standard ground resting supports 3, for supporting at least one food baking chamber 4 provided with at least one opening 5 for insertion and removal of the food and at least one surface 6 for supporting such food.

The oven 1 comprises at least one chamber 7 for the combustion of at least one fuel such as wood or the like, which is separate with respect to the baking chamber 4 and is associated with the frame 2.

The frame 2, for example, may be made of different materials; the baking chamber 4 and the combustion chamber 7 are, for example, lined with refractory material, as is known to the person skilled in the art.

The combustion chamber 7 comprises at least one discharge port 8 for the hot gases, generally designated in the figures by the letter F, that derive from the combustion of the fuel burned therein, such port being associated with first means for extracting such hot gases.

The first extraction means, in particular, wrap at least partially around the baking chamber 4 in order to heat it by convection.

In particular, the oven 1 comprises second means for extracting hot gases, which comprise a plurality of ports 9, 10 for the inflow of the gases extracted from the combustion chamber 7 and are connected to the baking chamber 4, in order to introduce in such baking chamber, above the supporting surface 6, such gases, which are adapted to make contact with the food arranged on the supporting surface 6.

Advantageously, the first and second extraction means coincide and comprise at least one extraction duct 11, one end 11a of which is associated with the discharge port 8 and a first portion 11b of which wraps around the baking chamber 4 in order to heat it by convection.

A second portion 11c, which is consecutive to the first one, of the extraction duct 11 comprises the plurality of inflow ports 9, 10 associated with the baking chamber itself.

The baking chamber 4 comprises at least one port 12 for the outflow of the gases introduced therein, which is associated with the baking chamber 4 in a lower region thereof, particularly in a region proximate to the supporting surface 6, for the expulsion of such gases cooled by passage through the food.

In particular, the baking chamber 4 comprises a front wall 13, where the insertion and removal opening 5 is arranged, a bottom 14 for supporting the supporting surface 6, a back wall 15, which is opposite to the insertion and removal opening 5, and a pair of side walls 16a, 16b, which are surmounted by an upper wall 17.

The oven 1 further comprises a door 18, which is for example associated so that it can tilt with the front wall 13 at the insertion and removal opening 5, for opening and closing the insertion and removal opening.

In particular, the extraction duct 11 wraps around the baking chamber 4, for example proximate to the bottom 14 thereof and optionally at least partially at the side walls 16a, 16b, - externally thereto - so as to heat the supporting surface 6, designed to bake food products.

It is possible to arrange above the bottom 14 a lining layer for the substantially uniform distribution of the heat of such bottom. In particular, the lining layer can have an increased thickness at the region of the bottom 14 that is arranged at the discharge port 8 (central region of the oven 1) with respect to the peripheral regions of such bottom, which has a lower thickness.

In the preferred embodiment shown in the figures, the combustion chamber 7 - which has an opening and closing door 19 for introducing the wood and gratings 20 for supporting the wood being burned - is arranged below the baking chamber 4; however, different and equivalent embodiments thereof are not excluded.

Advantageously, the plurality of inflow ports 9, 10 comprises a first plurality of inflow ports 9, which are distributed substantially uniformly in the baking chamber 4, at the side walls 16a, 16b thereof and above the supporting surface 6.

Such substantially uniform distribution allows the substantially homogeneous inflow of the hot gases along the depth of the baking chamber 4, depth being understood as the distance between the insertion and removal opening 5 (front wall 13) and the back wall 15.

Moreover, the plurality of inflow ports 9, 10 comprises at least one second plurality of inflow ports 10, which are distributed in the baking chamber 4, at the upper wall 17 thereof and above the supporting surface 6 for the substantially homogeneous distribution of the gases introduced in the baking chamber 4, also with respect to the width of such baking chamber, such width being defined by the distance between the side walls 16a, 16b and at the same time with respect to such depth (defined by the distance between the front wall 13 and the back wall 15).

In particular, the second plurality of inflow ports 10 has a substantially uniform distribution, the mutual distance between the inflow ports 10 being in fact substantially constant along the direction defined by the width (between such side walls) of the baking chamber.

Along the direction defined by the depth (between the insertion and removal opening 5 and the back wall 15), the second plurality of inflow ports 10 has, in this case also, a substantially uniform distribution, the second inflow ports 10 being in fact substantially mutually equidistant.

At the insertion and removal opening 5 and at the back wall 15, the upper wall 17 comprises two spacers 17a, such as to space the inlet of the gases into the baking chamber 4 from the insertion and removal opening and from the back wall and allow their recirculation in the baking chamber before being extracted from the outflow port 12.

The oven 1 comprises pumping means 21 for extracting the gases, for example of the type of a fan or the like, which are associated with at least one between the first and second extraction means, therefore with the extraction duct 11, and are arranged downstream of the baking chamber 4 with respect to the direction imposed to the flow of the gases from the combustion chamber 7 to such baking chamber, for the forced outflow of the gases cooled by passage through the baking chamber 4 in contact with the food.

The pumping means 21, in particular, are associated with a third portion 11 d of the extraction duct 11 which is arranged downstream of the baking chamber 4, for example above the frame 2 and jointly connected therewith.

In particular, the oven 1 comprises a plurality of outflow ports 12, which are arranged below the supporting surface and are connected to the third portion 11d of the extraction duct 11.

In particular, the outflow ports 12 are arranged below the supporting surface 6 and substantially at the front wall 13 (insertion and removal opening 5) and at the back wall 15. This arrangement in fact allows a recirculation of the gases F and their passage through the entire baking chamber 4 for forced passage through the food before flowing out of the baking chamber.

The oven 1 further comprises means for adjusting the passage section of the outflow ports 12, for example with mechanical actuation and not illustrated in detail because they are of the type of ordinary threaded elements that space the walls of the outflow port, in order to adjust the outflow of the gases F from the baking chamber 4.

For example, the third portion 11d has, in the region below the supporting surface 6, a slot with which a plate is associated adjustably by means of such threaded elements, the passage section of the outflow port being defined by the adjustable gap between the third portion 11d and such plate.

The third portion 11d has a ramified shape and is extended so as to lie above, laterally and below the baking chamber 4, into tubular portions that diverge from the pumping means 21, at the front wall 13 and at the back wall 15, up to the outflow ports 12 arranged below the supporting surface 6.

The gases, particularly by means of the arrangement described above of the plurality of inflow ports 9, 10 and of the outflow ports 12, are distributed uniformly in the baking chamber 4 at the central region of such baking chamber and are drawn from the outflow ports 12 at the region below the supporting surface 6, generating a turbulence in the flow of the gases that ensures therein a perfect homogeneous distribution thereof, as well as the forced passage thereof through the supporting surface 6 and, thus, through the food rested thereon; moreover, the path of the gases F along the third portion 11d allows their further cooling and thus allows the emission into the atmosphere of such gases at a lower temperature, entailing a lower environmental impact of the oven 1.

The oven 1 further comprises at least one auxiliary burner, not shown in the figure, of the gas-fired type, which is associated with the combustion chamber 7, so as to ensure the ignition of the wood in the starting steps of such oven or, as an alternative, ensure the use of the oven in gas-fired mode in case of lack of wood fuel and the like.

The oven 1 further comprises means 22 for feeding and storing the wood fuel in order to introduce it in the combustion chamber 7 upon reaching a minimum temperature threshold in the combustion chamber 7 and/or in the baking chamber 4.

The feeding and storage means 22 comprise elements 23 for collecting at least one discrete amount of solid fuel, which are associated with transfer means in order to transfer such collecting element at least from a loading region to a region for unloading the wood fuel into the combustion chamber 7.

The feeding and storage means are associated laterally and/or in a lower region with the combustion chamber 7, forming a surface for supporting and conveying the solid fuel, and are arranged laterally to an insertion opening, which is for example associated with the combustion chamber 7 at a level that is substantially equal to the level defined by such support and conveyance surface.

In particular, the transfer means comprise at least one bucket conveyor 24, as described above, provided with at least one flexible element, for example of the type of a chain, which is closed on itself in a loop and is wound around at least one driven roller and at least one roller which is motorized by independent and reversible motor means. The collecting elements 23 are associated with the flexible element so as to be mutually arranged in series and form the series of buckets of the conveyor.

It is possible to accommodate in each collecting element 23 one or more pellet logs or wood logs, which will define the dose of solid fuel to be fed into the combustion chamber 7 on demand.

Moreover, the feeding and storage means 22 comprise at least one pusher 25, which is slidingly associated with the frame 2 proximate to the insertion opening of the combustion chamber 7 and is such as to push the solid fuel from the collecting element 23, which faces such insertion opening, to the inside of the combustion chamber 7.

The pusher 25, for example, is of the type of a fluid-operated linear actuator, whose piston is adapted to make contact with the solid fuel in order to push it into the insertion opening.

The piston is arranged substantially transversely to the direction of advancement of the wood fuel defined by the bucket conveyor 24 and substantially parallel to the longitudinal axis of the solid fuel logs in order to push them along a direction that is substantially parallel to such longitudinal axis.

In particular, in this manner the insertion opening of the combustion chamber 7 can have a reduced entry cross-section, which therefore is slightly larger than the cross-section of the solid fuel logs transversely to their longitudinal axis.

The oven 1 can comprise means for removable closing of the insertion opening, not shown in the figure because they are of a known type, for example comprising a door associated in a tilting and/or sliding manner with respect to the combustion chamber.

The oven 1 comprises means for detecting the temperature inside the baking chamber 4, which are controlled by an actuation and control unit of the auxiliary burner so as to actuate the feeding and storage means 22 and/or an alarm system in case of a temperature drop inside the baking chamber below a given preset thermal limit value.

In practice it has been found that the described invention achieves the intended aim and objects and in particular the fact is stressed that the static oven for the industrial wood-fired baking of food, particularly bread, pizzas and the like, according to the invention, allows to obtain food products with high organoleptic characteristics and at the same time has a baking temperature that is substantially constant and continuous over time.

Moreover, the static oven according to the invention allows to contain the environmental impact that derives from the temperature at which the gases are released into the atmosphere and to increase the baking performance of the food products.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements without thereby abandoning the protective scope of the appended claims.

The disclosures in Italian Patent Application No. MO2009A000187, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A static oven (1) for the industrial wood-fired baking of food, particularly bread, pizzas and the like, comprising
- at least one frame (2) for supporting at least one food baking chamber (4), provided with at least one opening (5) for insertion and removal of food and at least one surface (6) for supporting said food;
- at least one chamber (7) for the combustion of at least one fuel such as wood or the like, which is separate with respect to said baking chamber (4) and is associated with said frame (2), said combustion chamber (7) comprising at least one discharge port (8) for the hot combustion gases (F) of said fuel, which is associated with first means for extracting said hot gases, said first extraction means wrapping at least partially around said baking chamber (4) in order to heat it by convection;
**characterized in that** it comprises second means for extracting said hot gases, which comprise a plurality of ports (9, 10) for the inflow of said gases extracted from said combustion chamber (7) and connected to said baking chamber (4), in order to introduce in said baking chamber (4), above said supporting surface (6), said gases adapted to make contact with said food, said baking chamber (4) comprising at least one port (12) for the outflow of said gases, which is associated with said baking chamber (4) for the expulsion of said gases cooled by passage through said food.

2. The oven (1) according to claim 1, **characterized in that** said plurality of inflow ports (9, 10) comprises a first plurality of inflow ports (9), which are distributed substantially uniformly in said baking chamber (4), at the side walls (16a, 16b) thereof and above said supporting surface (6).

3. The oven (1) according to claim 1 or 2, **characterized in that** said plurality of inflow ports (9, 10) comprises at least one second plurality of inflow ports (10), which are distributed in said baking chamber (4), at the upper wall (17) thereof and above said supporting surface (6), for the substantially uniform distribution of the gases introduced in said baking chamber (4).

4. The oven (1) according to one or more of the preceding claims, **characterized in that** said first and second extraction means coincide and comprise at least one extraction duct (11), one end (11a) of which is associated with said discharge port (8) and a first portion (11b) of which wraps around said baking chamber (4) to heat it by convection, a second portion (11c) of said extraction duct comprising said plurality of inflow ports (9, 10) associated with said baking chamber.

5. The oven (1) according to one or more of the preceding claims, **characterized in that** it comprises pumping means (21) for extracting said gases, which are associated with said extraction duct (11) and are arranged downstream of said baking chamber (4) with respect to the direction of flow of said gases from said combustion chamber (7) to said baking chamber (4), for the forced outflow of said gases cooled by passage through said baking chamber (4).

6. The oven (1) according to one or more of the preceding claims, **characterized in that** it comprises a plurality of outflow ports (12), said outflow ports (12) being arranged below said supporting surface (6).

7. The oven (1) according to one or more of the preceding claims, **characterized in that** it comprises means for adjusting the passage section of said outflow ports (12).

8. The oven (1) according to one or more of the preceding claims, **characterized in that** it comprises at least one auxiliary burner, of the gas-fired type, which is associated with said combustion chamber (7).

9. The oven (1) according to one or more of the preceding claims, **characterized in that** it comprises means for detecting the temperature inside said baking chamber (4) and/or said combustion chamber (7).

10. The oven (1) according to one or more of the preceding claims, **characterized in that** it comprises means (22) for feeding and storing the wood fuel in order to introduce it in said combustion chamber (7) upon reaching a minimum temperature threshold, detected by said detection means, in at least one between said combustion chamber (7) and said baking chamber (4).
